# EUROPEAN PATENT SPECIFICATION

(11) **EP 3 427 876 B1**
(45) Date of publication and mention of the grant of the patent: **22.06.2022**
(21) Application number: 17180497.4
(22) Date of filing: 10.07.2017
(51) Int. Cl.: B23B 51/00

(54) **ROTARY CUTTING INSERT AND TOOL HAVING AXIAL LOCKING MEMBER**
ROTIERENDER SCHNEIDEINSATZ UND WERKZEUG MIT AXIALEM VERRIEGELUNGSELEMENT
INSERT DE COUPE ROTATIF ET OUTIL COMPORTANT UN ÉLÉMENT DE BLOCAGE AXIAL

(43) Date of publication of application: 16.01.2019
(73) Proprietor: Sandvik Intellectual Property AB, 811 81 Sandviken (SE)
(72) Inventor: EKBÄCK, Johan, SE-802 64 Gävle (SE); PÄBEL, Helena, 811 70 Järbo (SE)
(74) Representative: Sandvik

(56) References cited:
- WO-A1-2008/014367
- DE-A1-102015 220 791
- US-A1- 2008 193 237
- US-A1- 2015 104 266
- US-B1- 7 625 161

## Description

### Field of invention

The present invention relates to a cutting insert according to the preamble of claim 1 and to a rotary drill tool in which the insert is mountable to a support body so as to maximise retention of the insert and keeping the insert centred on the support body whilst minimising stress and fatigue at the support body. Such a cutting insert and such a rotary drill tool are known from US 2008/193237 A1.

### Background art

Multi-component drilling tool assemblies have been developed in which an insert formed from a hard expensive material (such as a cemented carbide, ceramic or the like) is releasably axially and radially locked at a tool or carrier body formed from a lower hardness and less expensive material. The insert is typically regarded as a wear part and is provided with an axially forward facing cutting region that typically includes a series of cutting edges and cutting surfaces.

Control and management of the transmission of axial loading forces and torque from the insert to the drill body is required to securely mount the insert during use whilst enabling insert replacement once worn. Bayonet-type locking interfaces have been developed in an attempt to appropriately transfer such loading forces.

US 7,625,161 discloses a rotary cutting tool assembly in which a cutting insert is releasably mounted at a tool shank alternatively termed a drill or support body. The insert is formed as a body having respective head and tail sections with axial loading forces being transferred from the insert into the shank via axial support surfaces. In an attempt to maximise the axial lock of the insert, the axial support surfaces are declined relative to a plane extending perpendicular to a longitudinal axis of the drill tool.

Existing drill tool assemblies of the aforementioned type are disadvantageous in a number of respects. In particular, the insert is axially locked at an axially forward jaw region of the support body by bayonet arms that are forced radially inward to compress against the insert by the action of the force transfer through the declined axial support surfaces. However, the insert may not be sufficiently centred.

### Summary of the Invention

It is an objective of the present invention to provide an axial lock of the insert at the support body that is not detrimental to a centring of the insert in position at the support body. In particular, it is an object to provide an axial lock of the insert in position at the support body which prevents the insert from separating from the support body for example when the tool is moved without contacting a work piece, when the tool is retracted after a drilling operation or in case vibrations should occur.

It is a specific objective to provide an insert and a drill tool assembly that facilitates mounting and removal of the insert at the support body by managing and controlling the loading forces between the support body the insert. It is a further specific objective to maximise the service lifetime of the support body by minimising fatigue and stress concentrations at the region of mounting the insert without compromising the strength by which the insert is axially and rotationally locked at the support body.

The objectives are achieved by providing an insert having at least one projection extending radially outward at an axial position between an axially forward facing cutting region and rearward facing axial support surfaces that abut corresponding axially forward facing support surfaces of the support body. By positioning the projection level with or axially forward of the axial support surfaces provides that a volume, radius and/or axial length of a rearwardmost centring neck portion of the insert may be maximised.

Such an arrangement is advantageous to maximise or configure as desired the axially rearward neck portion for maximised centring of the insert at the support body. Additionally, the subject invention is advantageous to provide a secure axial lock without compromising a centring function of insert at the support body during use.

According to the present invention there is provided a cutting insert of a rotary drill tool for cutting metal according to claim 1 comprising: a head and neck extending along a longitudinal axis, the head having an axially forward facing cutting region and the neck having an axially rearward facing mount region, at least the neck capable of being releasably mountable within a jaw of a support body; the head having generally axially rearward facing axial support surfaces projecting radially outward from the neck for abutment with corresponding axial support surfaces of the support body; wherein the head is formed by a pair of generally diametrically opposed lobes projecting radially outward from the axis; characterised by: at least one radial projection extending from an axial position of the insert at the head and positioned in a circumferential direction between the lobes.

Incorporating the projection at an axial position corresponding to the lobes of the head, as indicated, does not negatively affect the function of the axially rearward neck so as to provide the centring function. Additionally, positioning the projection in a circumferential direction between the lobes of the head is advantageous to achieve a desired axial lock without reducing the capability of torque transfer between the lobes and the bayonet arms of the support body. In particular, the surface area of the torque transfer surfaces of the lobes may be configured as desired without influence or restriction by the axially locking projection.

Optionally, at least a part of the at least one radial projection has a width in the axial direction that is less than an axial length of the head between an axially forwardmost tip of the cutting region and an axially rearwardmost part or edge of the axial support surfaces. Preferably, the width of at least the part of the projection is in the range 2 to 30%; 2 to 20%; 5 to 20%; 5 to 15% or 7 to 15% of the axial length of the head. Such a configuration provides a projection with sufficient mass to be capable of withstanding axial separating forces, such as negative axial forces when retracting the tool from a work piece, to achieve the desired lock of the insert at the support body without compromising other characteristics and functions of the insert and support body such as the desired control of the transmission of loading forces between the insert and support body.

Preferably, the at least one radial projection comprises at least two generally diametrically opposite first radial projections formed as ribs having a length extending in a circumferential direction capable of seating within a channel of the support body to axially secure the insert at the support body. The ribs comprise a length extending in the circumferential direction that is greater than a width (extending in the axial direction) and a depth (extending in the radial direction). Optionally, an angular length of each of the ribs in a circumferential direction between the lobes is in the range 2 to 85°; 2 to 80°; 5 to 80°; 5 to 70°; 5 to 60°; 10 to 60°; 20 to 60°; 30 to 60° or 40 to 50°. This is beneficial to distribute the axial forces along the length of the ribs so as to avoid point loading and reduce the magnitude of or eliminate stress concentrations that may otherwise be encountered if the projections were non-elongate in the circumferential direction

According to the present invention, the at least one radial projection extends radially outward from a radially outward facing locating surface that extends axially between the projection and the axially forward facing cutting region; wherein a radial depth of the projection expressed as a quotient of a radius of a radially outermost surface of the projection and a radius of the locating surface is in the range 1.02 to 1.5; 1.025 to 1.5; 1.02 to 1.4; 1.025 to 1.4 or 1.05 to 1.3. Such a configuration provides a projection with sufficient mass to be capable of withstanding axial loading forces to achieve the desired lock of the insert at the support body without compromising other characteristics and functions of the insert and support body such as the desired control of the transmission of loading forces between the insert and support body.

Optionally, the projection is located in an axial direction closer to the axial support surfaces than the axially forward facing cutting region. Optionally, the projection is located in the axial direction within an axially rearward 30% of the axial length of the head between an axially forwardmost tip of the cutting region and an axially rearwardmost part or edge of the axial support surfaces.

Optionally, the insert further comprises at least one raised bump projecting radially outward from the radially inner surface or region of the head and at a position in a circumferential direction between the lobes to provide a tactile snap-click when the insert is rotated to mate with the support body. This provides that an operator can confirm when the insert is fully mated in position whilst not interfering with the centring surfaces. The second radial projection comprises a depth in the radial direction being appreciably less than the corresponding depth of the first radial projection such that the second radial projection has little or no effect in axially locking the insert at the support body.

Preferably, the first (and second) radial projections extend from a radially inner surface of the head that is aligned at an approximate corresponding radial position the outward facing surface of the neck. In particular, the surface from which the first (and second) projections extend may be considered to be an extension of the neck surface i.e., being aligned approximately at the same radial position (relative to the longitudinal axis). As such, the first (and second) projections are positioned radially inward of all or the majority of the lobes of the head. This relative positioning is beneficial to maximise the function of the axial support surfaces and torque transmission surfaces and in particular the transmission of such forces between the insert and support body. Accordingly, these surfaces and their respective component portions may be optimised for their specific functions.

Preferably, the neck of the insert is part cylindrical being defined by at least one curved radially outer surface that is devoid of any radially outward projection at an axial position below the head of the insert. This curved surface can be the radially outermost surface of the neck and being completely or entirely cylindrical. Accordingly the insert is configured for maximised centring and is obtainable by efficient manufacturing techniques and/or process (i.e. that avoid grinding or greatly facilitate grinding if required). Accordingly the neck is configured to contribute to the centring of the insert at the support body.

Preferably, the support surfaces comprise a first decline orientation aligned relative to a plane perpendicular to the longitudinal axis such that a radially outer region of each said surface is axially rearward relative to a radially inner region of each said surface. More preferably, the support surfaces comprises a second decline orientation being additional to the first decline orientation and aligned to extend in a circumferential direction relative to the plane perpendicular to the longitudinal axis. The first and second decline orientations are advantageous to direct and absorb the axial loading forces according to a plurality of force transmission directions/orientations between the insert and the tool body. In particular, the first decline orientation is advantageous to direct force components radially inward towards the longitudinal axis of the support body. This provides that the arms of the tool body are not forced apart radially due to excessive axial loading (pressing) of the insert onto the tool body. Additionally, stress and fatigue at the bayonet interface is managed and in particular limited appropriately. Such an arrangement is further advantageous to allow convenient mounting and in particular removal of the insert once worn. The second decline orientation is further beneficial to allow mounting of the insert at the support body by a twisting or rotation about the longitudinal axis which provides a centering function of the insert at the tool body.

Moreover, the second decline orientation, provides that a portion of the torque created by cutting forces during use is obtained by the axial support surfaces. In particular, some of tangential forces are instead directed towards the axial support surface such that the portion of the forces that would otherwise have been applied on specific separate torque transfer surfaces are directed axially downwards. This has a positive effect by reducing tool body fatigue.

Preferably, the second decline orientation extends such that a lead region or edge of each said surface in a rotational direction of the insert is positioned axially rearward relative to a trailing region or edge of each said surface in a rotational direction of the insert. Such a configuration is advantageous to provide that a portion of the torque force is transferred from the support body to the insert and directed axially downward into the axially rearward region of the insert and axially forward region of the support body during cutting.

Optionally, reference to the support surfaces being *'declined'* refers to the support surfaces being generally planar (i.e. flat) having a first and a second slope relative to a plane perpendicular to the axis of the tool and relative to a cutting tip or edge of the insert. Accordingly, the support surfaces have an orientation that slopes away from the axially forward tip or cutting edge in both a radial direction and a circumferential direction (alternatively referred to as a direction of a tangent to a circle, which has the central longitudinal axis of the insert or support body as centre.)

Optionally, along a direction of a tangent to a circle, which has the central longitudinal axis of the insert as centre, an angle (δ) by which the second decline orientation is declined from said plane is in the range 1 to 50°, 1 to 45°, 1 to 30°, 1 to 20°, 2 to 20°, 1 to 15°, 2 to 15°, or more preferably 5 to 15°. The tangent to the circle may extend at any radial position of each respective support surface between a radially inner and a radially outer region (or edge) of each support surface. Optionally, the tangent may be positioned at a mid-radial region of each support surface between a radially inner and outer region (or edge) of each respective support surface. Angles greater than the recited ranges will not appropriately transfer axial loading forces between the insert and support body and will contribute to creating tangential directed forces that will in turn force the arms radially outward.

Optionally, an angle (θ)by which the first decline orientation is declined from the plane is in the range 1 to 50°, 1 to 45°, 2 to 45°, 2 to 30°, 5 to 20°, 5 to 15°, or 10 to 15°. An angle less that the recited ranges would have little or no effect in forcing the arms radially inward to clamp the insert whilst orientations above the recited ranges will increase the magnitude of stress concentrations within the insert and the likelihood of crack propagation. Preferably, each of the lobes comprise a radially and axially extending torque transfer surface for abutment contact with a corresponding torque transfer surface of the support body; wherein in plane extending perpendicular to the longitudinal axis, the torque transfer surface of the insert is orientated relative to the radius of the head at an angle in the range 0 to 60°, 0 to 50°, 0 to 45°, 1 to 50°, 1 to 45°, 1 to 30°, 1 to 20°, 2 to 20°, or 3 to 15°. This relative orientation of the torque transfer surfaces achieves the desired transmission of radial forces encountered during cutting whilst maintaining the arms radially retained to clamp the insert in response to torque forces. The orientation of the torque transfer surfaces may be positive or negative relative to the radius so as to be inclined or declined relative to the rotational direction.

Preferably, each of the diametrically opposed lobes of the head having a radially outermost envelope surface configured to cooperate with, for example align generally with, corresponding radially outer envelope surfaces of the support body, wherein at least some surfaces of the lobes in part define an axially forward region of axially extending chip flutes of the support body.

According to the present invention there is provided a rotary drill tool for cutting metal according to claim 1 comprising: an insert as claimed in claim 1; and a support body extending along the longitudinal axis and terminated at an axially forward end by at least two axially extending arms, the arms spaced apart about the axis so as to define the jaw; each arm having a shoulder presenting a generally axially forward facing axial support surface , the insert releasably mountable within the jaw between the arms such that the axial support surfaces of the insert and the support body are configured for abutment with one another respectively; and each of the arms at a radially inner surface comprise a recess configured to receive respectively the at least one projection of the insert to axially retain the insert at the support body.

Preferably, the recess of each of the arms comprises a channel having a length extending in a circumferential direction and positioned axially at or forward of the shoulder of each arm configured to receive respectively the ribs of the insert. The projection and the channel comprise a complementary length, width and depth in the circumferential, axial and radial directions so as to allow the projections to be mated within the respective channel such that opposed contact surfaces are capable of abutting axially to axially lock the insert at the support body so as to prevent axial forward and rearward movement.

Preferably, a region of the jaw of the support body to receive the neck of the insert is part cylindrical and is defined by at least one curved radially inner surface that is devoid of any radially inward projection. Such an arrangement provides a complementary seating surface of the neck of the insert to contribute to the centering of the insert and the support body.

### Brief description of drawings

A specific implementation of the present invention will now be described, by way of example only, and with reference to the accompanying drawings in which:
Figure 1 is a perspective view of a drill tool assembly having an elongate support body releasably mounting at one axial end a cutting insert according to a specific implementation of the present invention;
Figure 2 is an exploded magnified view of the cutting insert positioned for mounting at the axial forward end of the support body of figure 1;
Figure 3 is a side elevation view of the insert of figure 2;
Figure 4 is a further side view of the insert of figure 3 rotated through 90° about its central longitudinal axis relative to the view of figure 2;
Figure 5 is a plan view of the insert of figure 4;
Figure 6 is a further magnified plan view of the insert of figure 5;
Figure 7 is an underside view of the insert of figure 6;
Figure 8 is a perspective view of an axially forward insert mounting region of the support body of figure 2.

### Detailed description of preferred embodiment of the invention

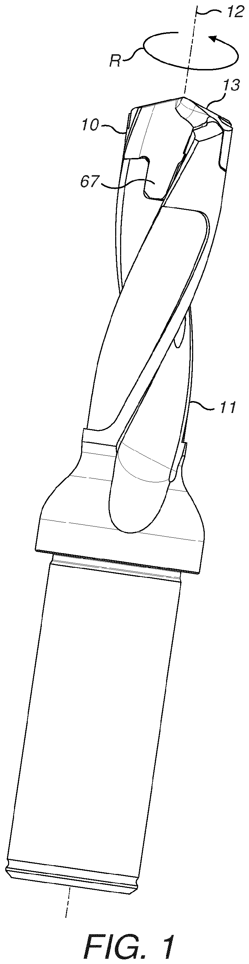

Referring to figure 1 a cutting tool implemented as a drilling tool comprises an elongate support body 11. A cutting insert 10 is releasably mounted at an axially forward end of support body 11. Insert 10 comprises an axially forwardmost, axially forward facing cutting region 13 and an axially rearwardmost mount region 67. Mount region 67 and the axial forward end of support body 11 are shaped complementary to one another both axially and radially as described in detail below so as to provide control and management of the transmission of loading forces between insert 10 and support body 11 during use. Such loading forces include axial and radial forces in addition to torque resultant from the rotation of the cutting tool in direction R about a central longitudinal axis 12 extending though insert 10 and support body 11.

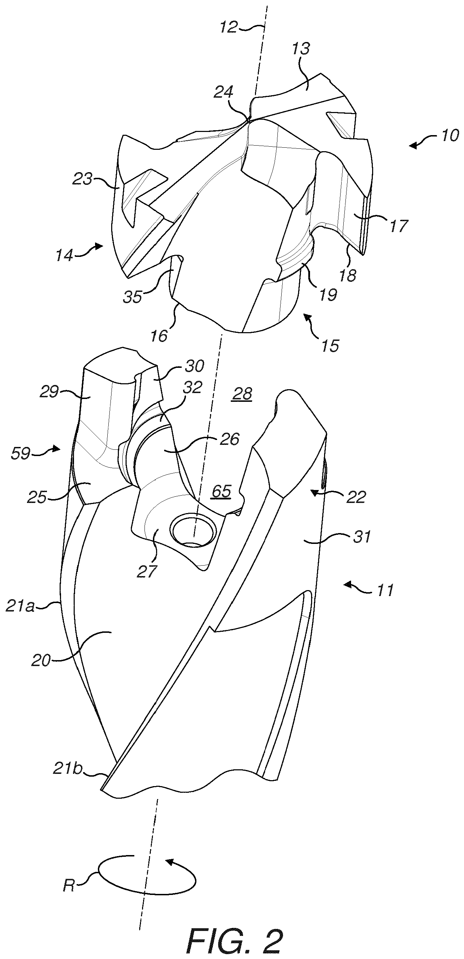

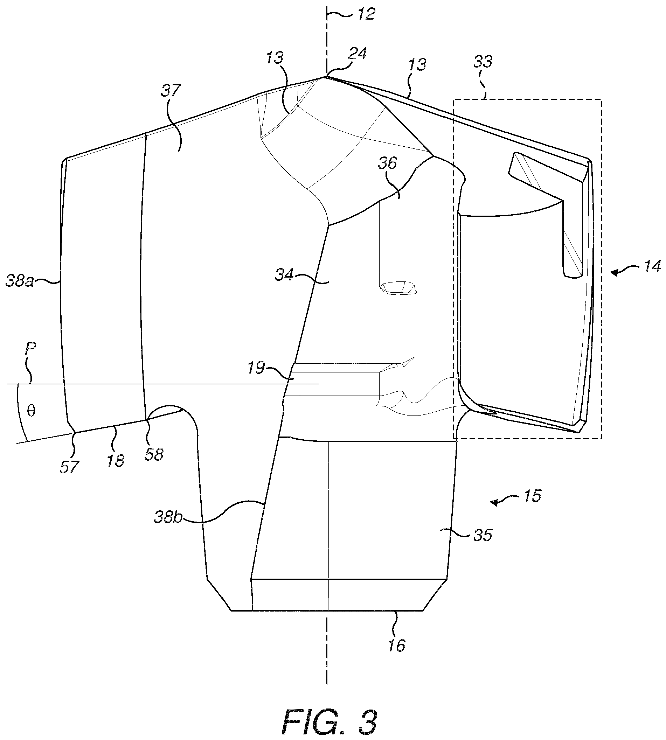

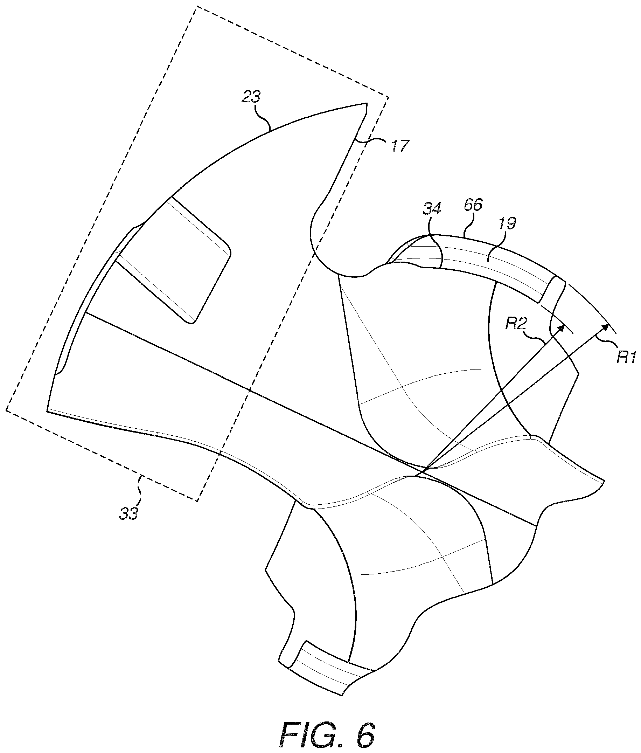

Referring to figure 2, insert 10 may be considered to comprise an axially forward head 14 being radially enlarged relative to a generally cylindrical central neck 15 from which the head extends. As detailed in figures 3 and 6, head 14 is formed generally by a pair of diametrically opposed lobes 33 that project radially outward from axis 12 and neck 15. Forward facing cutting region 13 extends over lobes 33 and the inner central portion of insert 10 and is generally part conical (or domed) having a central axially forwardmost cutting tip 24 from which extend radially outward a series of cutting edges and corresponding cutting surfaces. Each of the lobes 33 are terminated at their axially rearward end by an undercut so as to present generally axially rearward facing axial support surfaces 18. Surfaces 18 project radially outward from an axially forward region of the central neck 15. Each lobe 33 further comprises a torque transfer surface 17 having a length extending axially and a width extending generally radially. Each torque transfer surface 17 extends axially between the rearward facing axial support surfaces 18 and the forward facing cutting region 13. Additionally, torque transfer surfaces 17 are positioned so as to extend readily inward from a radial perimeter of the lobes 33. Head 14 comprises radially outward facing envelope surfaces 23 (formed at the radially outer regions of the lobes and neck 15 comprises a corresponding radially outward facing generally cylindrical (or slight conical) surface 35. A projection 19 extends radially outward from an axially rearward portion of head 14 and in a circumferential direction between each of the lobes 33 as detailed further below. Accordingly, insert 10 comprises two diametrically opposed radial projections 19. Neck 15 is terminated at its axially rearward end by a part circular planar base surface 16.

Elongate support body 11 may be considered to comprise a pair of diametrically opposed elongate members that are twisted about axis 12 so as to extend along a helical path and define between them axially extending helical chip flutes 20 defined between an axially extending trailing edge 21a and a corresponding axially extending leading edge 21b relative to the rotational direction R. Support body 11, at its axially forward end, comprises a pair of retaining arms indicated generally by reference 22 spaced apart about axis 12 so as to be diametrically opposite one another. A jaw 28 is defined radially between arms 22 and is configured to releasably mount insert neck 15 and lobes 33. In particular, radially inward facing surfaces of arms 22 define the jaw 28 with such surfaces including part cylindrical surfaces 26 that between them define a base cavity 65 to receive and releasably mount neck 15. Arms 22 also comprise radially inward facing locating surfaces 30 (positioned towards the axial forwardmost ends of arms 22) for positioning opposed to/against radially inner surface regions of head 14 (between lobes 33 in a circumferential direction). The inward facing surfaces 26 and 30 are separated axially by a channel 32 extending in a circumferential direction around axis 12 along a full width of each arm 22 (in the circumferential direction). Each channel 32 is appropriately dimensioned so as to receive each respective projection 19 to axially lock insert 10 at support body 11 when mounted in position as illustrated in figure 1. Cavity 65 comprises a base surface 27 configured to be positioned opposed to insert base surface 16. With insert 10 mounted in position at support body 11 as illustrated in figure 1, insert envelope surfaces 23 are aligned to be positioned generally coplanar with corresponding radially outward facing envelopes surfaces 31 of support body 11.

Each arm 22 comprises a shoulder indicated generally by reference 59 positioned axially at the same position as channel 32 at the axial junction between arm inward facing surfaces 26 and 30. Each shoulder 59 presents an axially forward facing axial support surface 25 being dimensioned and aligned complimentary with the axial support surfaces 18 of insert 10. That is, with insert 10 mounted in position at support body 11 (as illustrated in figure 1), the insert and support body axial support surfaces 18, 25 are configured to abut one another and provide transmission of axial forces between insert 10 and support body 11. Each shoulder 59 also comprises a respective torque transmission surface 29 being dimensioned and aligned so as to be complementary with the insert torque transmission surfaces 17 to provide transmission of torque forces from support body 11 to insert 10 during rotation R about axis 12.

Referring to figures 2 and 3, head lobes 33 are, in part, defined and separated in a circumferential direction by a concaved curved surface 37 recessed radially into head 14 and neck 15. Concave surface 37, in the circumferential direction is defined at one end by a trailing edge 38a and at the opposite end by leading edge 38b. Insert 10 comprises two diametrically opposite concave surfaces 37 (and corresponding pairs of edges 38a, 38b) that extend the complete (or almost complete) axial height of insert 10 between base surface 16 and cutting region 13 and are dimensioned and orientated so as to form axial extensions of chip flutes 20 at support body 11. In the circumferential direction, chip flute edge 38b defines one axial extending lengthwise side of a locating surface 34 that extends in a short circumferential distance between a trailing end of each lobe 33 and chip flute concave surface 37. Radial projection 19 is positioned at a trailing lengthwise end of locating surface 34 and also extends in a circumferential direction between the trailing end of each lobe 33 and edge 38b. An axially forward end of locating surface 34 terminates at the forward facing cutting region 13 with each locating surface 34 being generally part cylindrical and having a similar radius to the cylindrical neck surface 35 (relative to common axis 12).

A second radial projection 36 extends radially outward from an axially forward half of locating surface 34. Second projection 36 is positioned in a circumferential direction closer to the trailing end of each lobe 33 relative to concave surface edge 38b. Additionally, second projection 36 is axially separated from projection 19. As illustrated in figure 3, projection 19 may be considered to be formed as a rib, ridge or shelf having a length extending in the circumferential direction, a width extending in the axial direction and a depth extending in the radial direction (relative to locating surface 34). In contrast, second projection 36 comprises a radial depth being less than 10% or 5% of the corresponding radial depth of projection 19 (relative to locating surface 34) with second projection 36 having a length extending in the axial direction being approximately equal to an axial forward half of locating surface 34. As such, second projection 36 may be regarded as a raised bump projecting from locating surface 34.

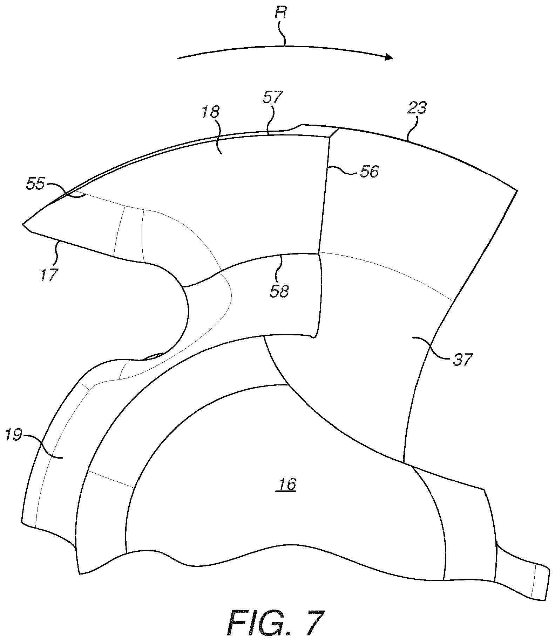

Referring to figure 3 and 7, each head lobe 33 is defined at its axially rearward end by a rearward facing axial support surface 18. Each surface 18 relative to a plane P (aligned perpendicular to axis 12) may be considered to be declined at an angle θ such that a radially outer widthwise end region 57 of surface 18 is positioned axially rearward relative to a radially inner widthwise end region 58.

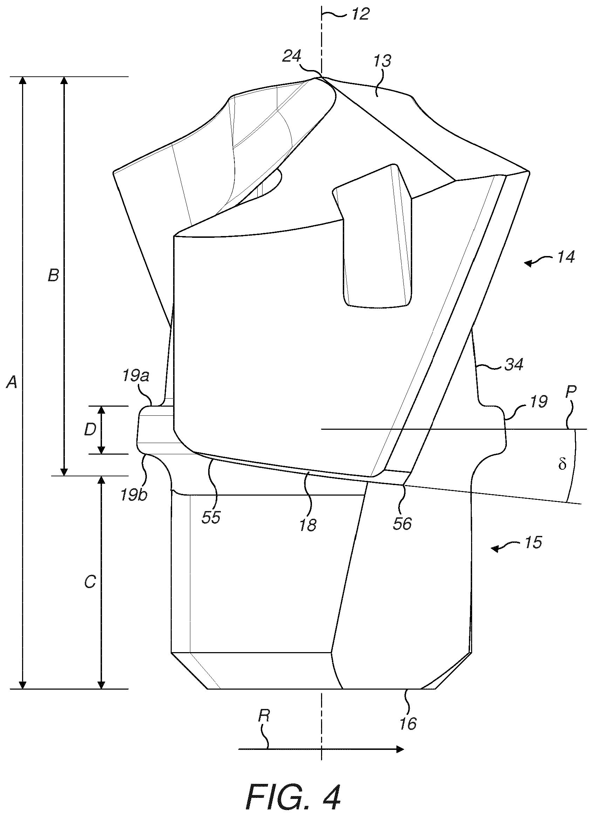

As illustrated in figure 4 and 7, each axial support surface 18 comprises a second declined orientation extending in a circumferential direction and rotational direction R. Relative to the axially perpendicular plane P, each surface 18 is declined in the circumferential direction such that a leading lengthwise end region 56 of surface 18 is positioned axially rearward relative to a trailing lengthwise end region 55 with respect to the rotational direction R. In particular, each surface 18 is declined in the circumferential direction from plane P by angle δ.

According to the specific implementation, θ is in a range 5 to 15° and δ is in a range 3 to 15°. As illustrated in figures 3 and 4, each axial support surface 18 is located at approximately the same axial position as projection 19 such that the axially forward widthwise and lengthwise end regions 58, 55 (of surface 18) are positioned at or close to an axially rearward part of projection 19. Additionally, surfaces 18 are positioned at the junction between neck 15 and head 14. Each axial support surface 18 (within the perimeter defined by widthwise and lengthwise end regions 57, 58, 55 and 56) is generally planar.

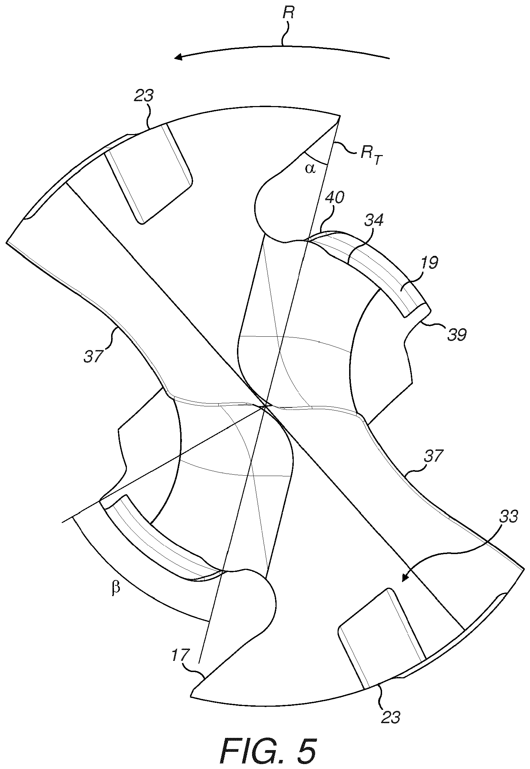

Referring to figure 5, each lobe torque transfer surface 17 is positioned in the rotational direction R at the trailing end of each lobe 33 so as to be abutted by the corresponding support body torque transfer surface 29 of each respective arm 22 to allow transmission of the rotational drive from body 11 to insert 10. Each torque transfer surface 17, 29 is planar and comprises a length extending in the axial direction being greater than a corresponding width extending in the radial direction. According to the specific implementation, each torque transfer surface 17, 29 is generally rectangular. In the plane P each insert torque transfer surface 17 is orientated to be transverse to the radius R_{T} of head 14. In particular, each torque transfer surface extends at an acute angle α relative to radius R_{T} where α according to the specific implementation is in a range 0 to 60°. According to further specific implementations, each surface 17 may be orientated in the opposite (negative) acute angle relative to radius R_{T} where the equivalent negative α may be in the range -45 to 0°. Accordingly, relative to R_{T}, α may extend from -45° to 60°.

As indicated, projection 19 comprises a length extending in the circumferential or rotational direction R having a first leading lengthwise end 40 and a second trailing lengthwise end 39. The angular length β of which projection 19 extends in the circumferential (rotational) direction is in a range 5 to 60°. According to the specific implementation, leading lengthwise end 40 is tapered relative to trailing lengthwise end 39 so as to provide a generally smooth transition from locating surface 34 to a radially outermost surface 66 that defines the radially outer perimeter of projection 19. Referring to figure 6, the radial depth of projection 19 may be defined at the difference between a radius R1 (at outermost surface 66) and a radius R2 (at locating surface 34). According to specific implementations, a quotient R2/R1 may be in the range 1.025 to 1.5; 1.025 to 1.4 or more preferably 1.05 to 1.3. Additionally, a radial width of projection 19 (the difference between R1 and R2) may be in the range 10 to 30% of a maximum radius R_{T} corresponding to the radius between axis 12 and envelope surface 23.

Referring to figure 4, insert 10 comprises a total axial length A defined between base surface 16 and cutting tip 24; a head axial length B defined between a mid-length region (between end regions 55, 56) of each axial support surface 18 and cutting tip 24; a neck axial length C defined between base surface 16 and the mid-length region of each axial support surface 18. Projection 19 comprises a width D in the axial direction being the axial distance over which projection 19 extends between an axial forward end wall face 19a and a corresponding axial rearward end wall face 19b. According to the specific implementation, a quotient of D/A is in the range 0.05 to 0.1; a quotient of D/B is in the range 0.05 to 0.15; a quotient of C/B is in the range 0.2 to 1.0.

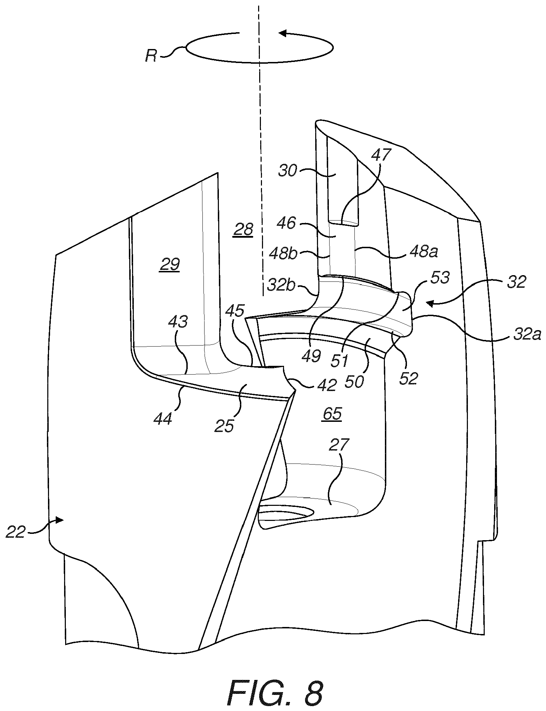

Referring to figure 8, and as detailed with reference to figure 2, each bayonet arm 22 comprises a corresponding axial support surface 25 having a length extending in the circumferential (rotational) direction between a forward end region 42 and a trailing end region 43 together with a corresponding radial width defined between a radially inner end region 45 and a radially outer end region 44. Each surface 25 comprises the same dual first and second declined orientation as detailed with respect to axial support surfaces 18 of insert 10. In particular, each axial support surface 25 is declined from plane P in the axial direction by the same angle θ and is also declined in the circumferential (rotational) direction relative to plane P by the same angle δ. Accordingly, surfaces 18 and 25 are configured to align in complete touching contact over substantially their complete respective surface areas. Similarly, each of the torque transfer surfaces 29 at support body 11 extend at the same or a similar acute angle α relative to radius R_{T} where angle α may be positive or negative relative to R_{T}.

Channel 32 positioned at the shoulder 59 of each arm 22 comprises a length extending in the circumferential (rotational) direction corresponding to the angular length β of projection 19 in addition to comprising a corresponding radial depth being similar to the quotient R1/R2 so as to accommodate projection 19 within channel 32. As such, at least a part of each arm 22 overlaps radially each projection 19 so as to axially lock insert 10 at support body 11. In particular, each channel 32 comprises a corresponding lengthwise end 32a, 32b and a pair of lengthwise extending sidewalls 51, 52 that define the radial depth of each channel 32. With each projection 19 located within each channel 32, the lengthwise extending wall surfaces 19a and 19b (of projections 19) are capable of abutting the corresponding lengthwise extending walls 51, 52 of channels 32 to provide the axial lock in the forward direction (the direction acting to separate the insert from the support body). Additionally, each channel is further defined by a part cylindrical radially inward surface 53 configured for positioning opposed to the cylindrical radially outermost surface 66 (of each projection 19). Each channel lengthwise end 32a, 32b is 'open' so as to allow insert 10 to be rotated about axis 12 to introduce and receive projection 19 within channel 32. The axially rearwardmost channel wall 52 transitions into a declined surface 50 (having a length also extending in the circumferential direction) which transitions axially rearward to define cavity 65 configured to accommodate insert neck 15.

The radially inward facing locating surface 30 of each arm 22 comprises a radially recessed pocket 46 defined by a pair of axial end edges 47, 49 and a corresponding pair of opposed side edges 48a, 48b (separated in the circumferential direction). Each arm pocket 46 comprises a length and a width (in the axial and circumferential directions) to accommodate each respective second projection 36. In particular, as insert 10 is rotated into position between arms 22 (within jaw 28) each second projection 36 when received within each respective pocket 46 provides a corresponding snap-click tactile indication (as the projection 36 slides over side edges 48a, 48b).

In use, the first declined orientation of axial support surfaces 18, 25 (at the respective angle θ) is advantageous to direct a portion of the axial loading forces radially inward so as that arms 22 compress radially onto insert neck 15 with the sufficient magnitude to axially and rotationally hold insert 10 in mounted position within the jaw 28. The second decline orientation of surfaces 18, 25 (at the respective angle δ) is configured to control and manage the direction and magnitude of the torque and the axially and radially orientated forces as they are transmitted between insert 10 and support body 11. In particular, the second decline orientation is adapted to effectively limit the magnitude of the radially inward directed forces to prevent stress concentrations at the retaining arms 22 that would otherwise shorten or terminate the service lifetime of the support body 11.

The axial locking of insert 10 at support body 11, i.e. the locking against axial separation, is provided by the radial overlap of projections 19 and channels 32. By positioning projections 19 and channels 32 axially forward of neck 15 and cavity 65, a relative surface area (and volume and mass of material) of the neck 15 may be maximised so as to enhance the *'centring'* of the insert 10 at support body 11 with respect to axis 12.

Additionally, the relative axial position of the projections 19 is advantageous to facilitate manufacturing of the insert 10 either by a moulding technique (in which a need for precision machining/grinding may obviated) or by casting followed by precision grinding of the cylindrical surface 35. In particular, according to the present invention there are no projections or channels that may otherwise obstruct a grinding tool at the region of the neck 15.

## Claims

1. A cutting insert (10) of a rotary drill tool for cutting metal comprising:
a head (14) and a neck (15) extending along a longitudinal axis (12), the head having an axially forward facing cutting region (13) and the neck having an axially rearward facing mount region (67), at least the neck capable of being releasably mountable within a jaw (28) of a support body (11);
the head having generally axially rearward facing axial support surfaces (18) projecting radially outward from the neck for abutment with corresponding axial support surfaces (25) of the support body;
wherein the head is formed by a pair of generally diametrically opposed lobes (33) projecting radially outward from the axis;
wherein the lobes (33), in part, are defined and separated in a circumferential direction by a concaved curved surface (37) recessed radially into the head (14) and the neck (15); and
**characterised by**:
at least one radial projection (19) extending from a radially inner surface (34) of the head and positioned in a circumferential direction between the lobes;
wherein the at least one radial projection extends radially outward from a radially outward facing locating surface (34) that extends axially between the projection and the axially forward facing cutting region;
wherein a radial depth of the projection expressed as a quotient of a radius (R1) of a radially outermost surface (66) of the projection and a radius (R2) of the locating surface is in the range 1.02 to 1.5; 1.025 to 1.5; 1.02 to 1.4; 1.025 to 1.4 or 1.05 to 1.3.

2. The insert as claimed in claim 1 wherein at least a part of the at least one radial projection has a width (D) in the axial direction that is less than an axial length (B) of the head between an axially forwardmost tip (24) of the cutting region and an axially rearwardmost part (55) or edge of the axial support surfaces.

3. The insert as claimed in claim 2 wherein said width (D) of at least the part of the projection is in the range 2 to 30%; 2 to 20%; 5 to 20%; 5 to 15% or 7 to 15% of the axial length (B) of the head.

4. The insert as claimed in any preceding claim wherein the at least one radial projection comprises at least two generally diametrically opposite first radial projections formed as ribs having a length extending in a circumferential direction capable of seating within a channel (32) of the support body to axially secure the insert at the support body.

5. The insert as claimed in claim 4 wherein an angular length (β) of each of the ribs in a circumferential direction between the lobes is in the range 2 to 85°; 2 to 80°; 5 to 80°; 5 to 70°; 5 to 60°; 10 to 60°; 20 to 60°; 30 to 60° or 40 to 50°.

6. The insert as claimed in any preceding claim wherein the projection is located in an axial direction closer to the axial support surfaces than the axially forward facing cutting region.

7. The insert as claimed in claim 7 wherein the projection is located in the axial direction within an axially rearward 30% of the axial length of the head between an axially forwardmost tip (24) of the cutting region and an axially rearwardmost part (55) or edge of the axial support surfaces.

8. The insert as claimed in any preceding claim further comprises at least one raised bump (36) projecting radially outward from the radially inner surface of the head and at a position in a circumferential direction between the lobes to provide a tactile snap-click when the insert is rotated to mate with the support body.

9. The insert as claimed in any preceding claim wherein the neck of the insert is part cylindrical being defined by at least one curved radially outer surface (35) that is devoid of any radially outward projection at an axial position below the head of the insert.

10. The insert as claimed in any preceding claim wherein said support surfaces comprise a first decline orientation aligned relative to a plane (P) perpendicular to the longitudinal axis such that a radially outer region (57) of each said surface is axially rearward relative to a radially inner region (58) of each said surface.

11. The insert as claimed in claim 10 wherein said support surfaces comprises a second decline orientation being additional to the first decline orientation and aligned to extend in a circumferential direction relative to the plane perpendicular to the longitudinal axis.

12. The insert as claimed in claim 11 wherein the second decline orientation extends such that a lead region (56) or edge of each said surface in a rotational direction of the insert is positioned axially rearward relative to a trailing region (55) or edge of each said surface in a rotational direction of the insert.

13. A rotary drill tool for cutting metal comprising:
an insert as claimed in any preceding claim; and
a support body (11) extending along the longitudinal axis (12) and terminated at an axially forward end by at least two axially extending arms (22), the arms spaced apart about the axis so as to define the jaw (28);
each arm having a shoulder (59) presenting a generally axially forward facing axial support surface (25), the insert releasably mountable within the jaw between the arms such that the axial support surfaces of the insert and the support body are configured for abutment with one another respectively; and
each of the arms at a radially inner surface comprise a recess (32) configured to receive respectively the at least one radial projection (19) of the insert to axially retain the insert at the support body.

14. The tool as claimed in claim 13 when dependent on claim 4 wherein:
the recess (32) of each of the arms comprises a channel having a length extending in a circumferential direction and positioned axially at or forward of the shoulder (59) of each arm configured to receive respectively the ribs of the insert.

15. The tool as claimed in claims 13 or 14 wherein a region of the jaw of the support body to receive the neck of the insert is part cylindrical and is defined by at least one curved radially inner surface (26) that is devoid of any radially inward projection.

## Patentansprüche

1. Schneideinsatz (10) eines rotierenden Bohrwerkzeugs zum Schneiden von Metall, der Folgendes aufweist:
einen Kopf (14) und einen Hals (15), die sich entlang einer Längsachse (12) erstrecken, wobei der Kopf einen axial nach vorne weisenden Schneidbereich (13) und der Hals einen axial nach hinten weisenden Befestigungsbereich (67) aufweist, wobei zumindest der Hals lösbar in einer Backe (28) eines Stützkörpers (11) befestigt werden kann, wobei der Kopf im Wesentlichen axial nach hinten gerichtete axiale Stützflächen (18) aufweist, die vom Hals radial nach außen vorstehen, um an entsprechenden axialen Stützflächen (25) des Stützkörpers anzuliegen,
wobei der Kopf durch ein Paar von im Wesentlichen diametral gegenüberliegenden Flügeln (33) gebildet wird, die von der Achse radial nach außen ragen,
wobei die Flügel (33) teilweise durch eine konkav gekrümmte Fläche (37), die radial in den Kopf (14) und den Hals (15) eingelassen ist, definiert und in einer Umfangsrichtung getrennt sind, und
**gekennzeichnet ist durch**:
mindestens einen radialen Vorsprung (19), der sich von einer radial inneren Fläche (34) des Kopfes erstreckt und in einer Umfangsrichtung zwischen den Flügeln angeordnet ist,
wobei sich der mindestens eine radiale Vorsprung von einer radial nach außen weisenden Anordnungsfläche (34), die sich axial zwischen dem Vorsprung und dem axial nach vorne weisenden Schneidbereich erstreckt, radial nach außen erstreckt,
wobei eine radiale Tiefe des Vorsprungs, ausgedrückt als ein Quotient aus einem Radius (R1) einer radial äußersten Fläche (66) des Vorsprungs und eines Radius (R2) der Anordnungsfläche im Bereich von 1,02 bis 1,5, 1,025 bis 1,5, 1,02 bis 1,4, 1,025 bis 1,4 oder 1,05 bis 1,3 liegt.

2. Einsatz nach Anspruch 1, wobei mindestens ein Teil des mindestens einen radialen Vorsprungs in axialer Richtung eine Breite (D) aufweist, die kleiner ist als eine axiale Länge (B) des Kopfes zwischen einer axial vordersten Spitze (24) des Schneidbereichs und einem axial hintersten Teil (55) oder einer Kante der axialen Stützflächen.

3. Einsatz nach Anspruch 2, wobei die Breite (D) zumindest des Teils des Vorsprungs im Bereich von 2 bis 30%, 2 bis 20%, 5 bis 20%, 5 bis 15% oder 7 bis 15% der axialen Länge (B) des Kopfes liegt.

4. Einsatz nach einem der vorangehenden Ansprüche, wobei der mindestens eine radiale Vorsprung mindestens zwei im Wesentlichen diametral gegenüberliegende erste radiale Vorsprünge umfasst, die als Rippen ausgebildet sind und eine sich in Umfangsrichtung erstreckende Länge aufweisen, die in der Lage sind, in einem Kanal (32) des Stützkörpers sitzen zu können, um den Einsatz am Stützkörper axial zu sichern.

5. Einsatz nach Anspruch 4, bei dem eine Winkellänge (β) jeder der Rippen in einer Umfangsrichtung zwischen den Flügeln im Bereich von 2 bis 85°, 2 bis 80°, 5 bis 80°, 5 bis 70°, 5 bis 60°, 10 bis 60°, 20 bis 60°, 30 bis 60° oder 40 bis 50°.

6. Einsatz nach einem der vorhergehenden Ansprüche, wobei der Vorsprung in axialer Richtung näher an den axialen Stützflächen liegt als der axial nach vorne gerichtete Schneidbereich.

7. Einsatz nach Anspruch 7, wobei der Vorsprung in axialer Richtung der axialen Länge des Kopfes zwischen einer axial vordersten Spitze (24) des Schneidbereichs und einem axial hintersten Teil (55) oder Rand der axialen Stützflächen liegt.

8. Einsatz nach einem der vorhergehenden Ansprüche ferner umfassend mindestens eine erhöhte Erhebung (36), die von der radialen Innenfläche des Kopfes radial nach außen und an einer Position in Umfangsrichtung zwischen den Flügeln hervorsteht, um ein fühlbares Einrasten zu erzeugen, wenn der Einsatz gedreht wird, um mit dem Stützkörper verbunden zu werden.

9. Einsatz nach einem der vorhergehenden Ansprüche, wobei der Hals des Einsatzes teilzylindrisch ist und durch mindestens eine gekrümmte, radial äußere Fläche (35) definiert ist, die an einer axialen Position unterhalb des Kopfes des Einsatzes keinen radialen Vorsprung nach außen aufweist.

10. Einsatz nach einem der vorangehenden Ansprüche, wobei die Stützflächen eine erste Neigungsorientierung aufweisen, die relativ zu einer Ebene (P) senkrecht zur Längsachse ausgerichtet ist, so dass ein radial äußerer Bereich (57) jeder dieser Flächen relativ zu einem radial inneren Bereich (58) jeder der Flächen axial nach hinten gerichtet ist.

11. Einsatz nach Anspruch 10, wobei die Stützflächen eine zweite Neigungsausrichtung aufweisen, die zusätzlich zu der ersten Neigungsausrichtung ist und so ausgerichtet ist, um sich in einer Umfangsrichtung relativ zu der Ebene senkrecht zur Längsachse zu erstrecken.

12. Einsatz nach Anspruch 11, wobei sich die zweite Neigungsausrichtung so erstreckt, dass ein vorderer Bereich (56) oder eine Kante jeder der Flächen in einer Drehrichtung des Einsatzes relativ zu einem hinteren Bereich (55) oder einer Kante jeder Fläche in einer Drehrichtung des Einsatzes axial nach hinten positioniert ist.

13. Rotierendes Bohrwerkzeug zum Schneiden von Metall, das Folgendes aufweist:
einen Einsatz nach einem der vorhergehenden Ansprüche und
einen Stützkörper (11), der sich entlang der Längsachse (12) erstreckt und an einem axial vorderen Ende durch mindestens zwei sich axial erstreckende Arme (22) abgeschlossen ist, wobei die Arme um die Achse herum beabstandet sind, so dass sie die Backe (28) definieren,
wobei jeder Arm eine Schulter (59) aufweist, die eine im Wesentlichen axial nach vorne weisende axiale Stützfläche (25) darstellt, wobei der Einsatz innerhalb der Backe zwischen den Armen so lösbar angebracht werden kann, dass die axialen Stützflächen des Einsatzes und des Stützkörpers jeweils zur Anlage aneinander ausgebildet sind, und
wobei jeder der Arme an einer radial inneren Fläche eine Aussparung (32) aufweist, die so gestaltet ist, dass sie den mindestens einen radialen Vorsprung (19) des Einsatzes aufnimmt, um den Einsatz axial an dem Stützkörper zu halten.

14. Werkzeug nach Anspruch 13 in Abhängigkeit von Anspruch 4, wobei:
die Aussparung (32) jedes der Arme einen Kanal mit einer Länge aufweist, die sich in einer Umfangsrichtung erstreckt, und axial an oder vor der Schulter (59) jedes Arms angeordnet ist, der so konfiguriert ist, dass er jeweils die Rippen des Einsatzes aufnimmt.

15. Werkzeug nach Anspruch 13 oder 14, wobei ein Bereich der Backe des Stützkörpers zur Aufnahme des Halses des Einsatzes zunm Teil zylindrisch ist und durch mindestens eine gekrümmte radiale innere Fläche (26) definiert ist, die keinerlei radial nach innen gerichteten Vorsprung aufweist.

## Revendications

1. Pièce rapportée de coupe (10) d'un outil de perçage rotatif destiné à une découpe de métal comprenant :
une tête (14) et un col (15) s'étendant le long d'un axe longitudinal (12), la tête présentant une région de coupe axialement orientée vers l'avant (13) et le col présentant une région de montage axialement orientée vers l'arrière (67), le col au moins pouvant être monté de manière amovible dans une mâchoire (28) d'un corps de support (11) ;
la tête présentant des surfaces de support axial généralement axialement orientées vers l'arrière (18) faisant radialement saillie vers l'extérieur par rapport au col pour venir en butée avec des surfaces de support axial correspondantes (25) du corps de support ;
où la tête est formée par une paire de lobes généralement diamétralement opposés (33) faisant radialement saillie vers l'extérieur par rapport à l'axe ;
où les lobes (33), en partie, sont définis et séparés dans une direction circonférentielle par une surface incurvée concave (37) radialement en évidement dans la tête (14) et le col (15) ; et
**caractérisée par** :
au moins une saillie radiale (19) s'étendant depuis une surface radialement intérieure (34) de la tête et positionnée dans une direction circonférentielle entre les lobes ;
où la au moins une saillie radiale s'étend radialement vers l'extérieur par rapport à une surface de positionnement radialement orientée vers l'extérieur (34) qui s'étend axialement entre la saillie et la région de coupe axialement orientée vers l'avant ;
où une profondeur radiale de la saillie exprimée sous la forme d'un quotient d'un rayon (R1) d'une surface radialement la plus à l'extérieur (66) de la saillie et d'un rayon (R2) de la surface de positionnement se situe dans la plage allant de 1,02 à 1,5 ; de 1,025 à 1,5 ; de 1,02 à 1,4 ; de 1,025 à 1,4 ou de 1,05 à 1,3.

2. Pièce rapportée selon la revendication 1, dans laquelle au moins une partie de la au moins une saillie radiale présente une largeur (D) dans la direction axiale qui est inférieure à une longueur axiale (B) de la tête entre une extrémité axialement la plus à l'avant (24) de la région de coupe et une partie ou arête axialement la plus à l'arrière (55) des surfaces de support axial.

3. Pièce rapportée selon la revendication 2, dans laquelle ladite largeur (D) de la au moins une partie de la saillie se situe dans la plage allant de 2 à 30 % ; de 2 à 20 % ; de 5 à 20 % ; de 5 à 15 % ou de 7 à 15 % de la longueur axiale (B) de la tête.

4. Pièce rapportée selon l'une quelconque des revendications précédentes, dans laquelle la au moins une saillie radiale comprend au moins deux premières saillies radiales généralement diamétralement opposées formées sous la forme de nervures présentant une longueur s'étendant dans une direction circonférentielle pouvant loger dans un canal (32) du corps de support pour fixer axialement la pièce rapportée au niveau du corps de support.

5. Pièce rapportée selon la revendication 4, dans laquelle une longueur angulaire (β) de chacune des nervures dans une direction circonférentielle entre les lobes se situe dans la plage allant de 2 à 85° ; de 2 à 80° ; de 5 à 80° ; de 5 à 70° ; de 5 à 60° ; de 10 à 60° ; de 20 à 60° ; de 30 à 60° ou de 40 à 50°.

6. Pièce rapportée selon l'une quelconque des revendications précédentes, dans laquelle la saillie est située dans une direction axiale plus près des surfaces de support axial que de la région de coupe axialement orientée vers l'avant.

7. Pièce rapportée selon la revendication 7, dans laquelle la saillie est située dans la direction axiale dans les 30 % axialement vers l'arrière de la longueur axiale de la tête entre une extrémité axialement la plus à l'avant (24) de la région de coupe et une partie ou arête axialement la plus à l'arrière (55) des surfaces de support axial.

8. Pièce rapportée selon l'une quelconque des revendications précédentes, laquelle comprend en outre au moins une bosse (36) faisant radialement saillie vers l'extérieur par rapport à la surface radialement intérieure de la tête et à une position dans une direction circonférentielle entre les lobes pour permettre un engagement par encliquetage tactile lorsque la pièce rapportée est pivotée pour être accouplée avec le corps de support.

9. Pièce rapportée selon l'une quelconque des revendications précédentes, dans laquelle le col de la pièce rapportée est une partie cylindrique définie par au moins une surface radialement extérieure incurvée (35) qui est dépourvue de toute saillie radialement vers l'extérieur à une position axiale sous la tête de la pièce rapportée.

10. Pièce rapportée selon l'une quelconque des revendications précédentes, dans laquelle lesdites surfaces de support comprennent une première orientation d'inclinaison alignée par rapport à un plan (P) perpendiculaire à l'axe longitudinal de telle sorte qu'une région radialement extérieure (57) de chaque dite surface est axialement vers l'arrière par rapport à une région radialement intérieure (58) de chaque dite surface.

11. Pièce rapportée selon la revendication 10, dans laquelle lesdites surfaces de support comprennent une seconde orientation d'inclinaison qui s'ajoute à la première orientation d'inclinaison et alignée pour s'étendre dans une direction circonférentielle par rapport au plan perpendiculaire à l'axe longitudinal.

12. Pièce rapportée selon la revendication 11, dans laquelle la seconde orientation d'inclinaison s'étend de telle sorte qu'une région ou arête d'attaque (56) de chaque dite surface dans un sens de rotation de la pièce rapportée est positionnée axialement vers l'arrière par rapport à une région ou arête suivante (55) de chaque dite surface dans un sens de rotation de la pièce rapportée.

13. Outil de perçage rotatif destiné à une découpe de métal comprenant :
une pièce rapportée selon l'une quelconque des revendications précédentes ; et
un corps de support (11) s'étendant le long de l'axe longitudinal (12) et se terminant au niveau d'une extrémité axialement vers l'avant par au moins deux bras s'étendant axialement (22), les bras étant espacés autour de l'axe de sorte à définir la mâchoire (28) ;
chaque bras comportant un épaulement (59) présentant une surface de support axial généralement axialement orientée vers l'avant (25), la pièce rapportée pouvant être montée de manière amovible dans la mâchoire entre les bras de telle sorte que les surfaces de support axial de la pièce rapportée et du corps de support sont configurées pour venir en butée les unes contre les autres respectivement ; et
chacun des bras au niveau d'une surface radialement intérieure comprend un évidement (32) configuré pour recevoir respectivement la au moins une saillie radiale (19) de la pièce rapportée pour axialement retenir la pièce rapportée au niveau du corps de support.

14. Outil selon la revendication 13 lorsqu'elle dépend de la revendication 4, dans lequel :
l'évidement (32) de chacun des bras comprend un canal présentant une longueur s'étendant dans une direction circonférentielle et positionné axialement au niveau ou à l'avant de l'épaulement (59) de chaque bras configuré pour recevoir respectivement les nervures de la pièce rapportée.

15. Outil selon la revendication 13 ou 14, dans lequel une région de la mâchoire du corps de support destinée à recevoir le col de la pièce rapportée est une partie cylindrique et est définie par au moins une surface radialement intérieure incurvée (26) qui est dépourvue de toute saille radialement vers l'intérieur.
